# EUROPÄISCHE PATENTSCHRIFT

(11) **EP 1 072 808 B1**
(45) Veröffentlichungstag und Bekanntmachung des Hinweises auf die Patenterteilung: **24.09.2003**
(21) Anmeldenummer: 00250245.8
(22) Anmeldetag: 19.07.2000
(51) Int. Cl.: F16D 3/78, F16D 3/62

(54) **Flexible Wellenkupplung mit durch gummielastischem Material verbundenen, zueinander axial beabstandeten Lamellen**
Flexible coupling with axially spaced lamellae made from elastomeric material
Accouplement flexible avec lamelles en matériau élastomère espacées axialement

(30) Priorität: 27.07.1999 DE 19934469
(43) Veröffentlichungstag der Anmeldung: 31.01.2001
(73) Patentinhaber: ATEC-Weiss GmbH & Co. KG, D-48691 Vreden (DE)
(72) Erfinder: Weiss, Rudolf, 48691 Vreden (DE)
(74) Vertreter: Cohausz & Florack

(56) Entgegenhaltungen:
- EP-A- 0 359 916
- FR-A- 2 409 417
- US-A- 4 019 345
- PATENT ABSTRACTS OF JAPAN vol. 016, no. 450 (M-1312), 18. September 1992 (1992-09-18) & JP 04 157210 A (TOKAI RUBBER IND LTD), 29. Mai 1992 (1992-05-29)

## Beschreibung

Die Erfindung betrifft eine flexible Wellenkupplung, deren beide jeweils einen Anschlußflansch aufweisende Kupplungshälften über einen Lamellenpaketkranz drehstarr und axial- und winkelbeweglich miteinander verbunden sind, wobei der Lamellenpaketkranz aus mehreren durch Distanzelemente axial beabstandeten Lamellen gebildet und mittels umfangsmäßig verteilt angeordneter Befestigungs- und Spannelemente wechselweise an den beiden Anschlußflanschen befestigt ist, wobei die Lamellen durch ein gummielastisches Material, däs zwischen den Lamellen und an den Außenseiten des Lamellenpaketkranzes angeordnet ist, formschlüssig miteinander verbunden sind.

Derartige Kupplungen sind bekannt und haben sich in der Praxis bewährt (vgl. FR-A-2 409 417). Sie ermöglichen den Ausgleich sowohl eines Axialversatzes als auch eines Winkelversatzes der miteinander zu verbindenden Wellen. Je nach Drehzahl und Winkelversatz können dabei allerdings unangenehme Geräusche auftreten, da die Lamellen bei jeder Wellenumdrehung aufgrund des Winkelversatzes Biegebewegungen unterworfen sind.

Der vorliegenden Erfindung liegt daher die Aufgabe zugrunde, eine Kupplung der eingangs genannten Art bereitzustellen, bei der bei den durch einen Winkelversatzausgleich bedingten Biegebewegungen der Lamellen keine unangenehmen Geräusche oder wesentlich geringe Geräusche auftreten.

Diese Aufgabe wird erfindungsgemäß dadurch gelöst, daß der Lamellenpaketkranz mit Ausnahme der Axialflächen der Spannelemente vollständig mit dem gummielastischen Material umgossen ist, wobei die Lamellen im Bereich zwischen den Befestigungs- und Spannelementen mehrere Bohrungen aufweisen, in die das gummielastische Material formschlüssig eingegossen ist.

Der Gießvorgang kann nach dem Zusammensetzen des Lamellenpaketkranzes aus den Spannelementen, Lamellen und Distanzelementen erfolgen. Fertigungstechnisch läßt sich die Erfindung somit relativ einfach realisieren.

Versuche haben ergeben, daß bei einer in dieser Weise modifizierten Kupplung keine unangenehmen Geräusche mehr bei den durch einen Winkelversatzausgleich bedingten Biegebewegungen der Lamellen auftreten.

Durch die Bohrungen, in die das gummielastische Material formschlüssig eingegossen ist, wird eine besonders gute und dauerhafte Verbindung zwischen den Lamellen und dem gummielastischen Material sichergestellt, da das gummielastische Material über alle Lamellen miteinander verbunden ist.

Eine bevorzugte Ausgestaltung besteht darin, daß sich die Breite der Lamellen ausgehend von den Befestigungs- und Spannelementen zur Mitte zwischen den Befestigungs- und Spannelementen hin verjüngt. Hierdurch wird die Flexibilität der Lamellen und damit der Wellenkupplung verbessert, während die Festigkeit der Lamellen im Bereich der Befestigungs- bzw.

Verschraubungsstellen an den Anschlußflanschen weiterhin ausreichend hoch bleibt.

Weitere bevorzugte und vorteilhafte Ausgestaltungen der erfindungsgemäßen Kupplung sind in den Unteransprüchen angegeben.

Nachfolgend wird die Erfindung anhand einer ein Ausführungsbeispiel darstellenden Zeichnung näher erläutert. Im einzelnen zeigen:
- Fig. 1: eine Draufsicht auf einen Lamellenpaketkranz einer erfindungsgemäßen Wellenkupplung,
- Fig. 2: eine Schnittansicht auf den Lamellenpaketkranz gemäß Fig. 1 entlang der Schnittlinie A-A, und
- Fig. 3: einen vergrößerten Ausschnitt der Fig. 2 im Bereich eines Befestigungspunktes des Lamellenpaketkranzes.

Der in der Zeichnung dargestellte Lamellenpaketkranz besteht aus mehreren ringförmigen, axial zueinander beabstandeten Lamellen 2, die jeweils vier auf einem gemeinsamen Kreis angeordnete, gleichmäßig beabstandete Befestigungsbohrungen 6 aufweisen. Die Breite der Lamellen 2 verjüngt sich dabei von den Befestigungsbohrungen 6 aus zu der dazwischenliegenden Mitte. Im Bereich zwischen den Befestigungsbohrungen 6 sind ferner jeweils vier gleichmäßig beabstandete Bohrungen 7 symmetrisch angeordnet.

Durch die Befestigungsbohrungen 6 der Lamellen 2 ragt jeweils eine einen Kragen 8 aufweisende Spannbuchse 5, wobei eine der Lamellen 2 unmittelbar an dem Kragen 8 der

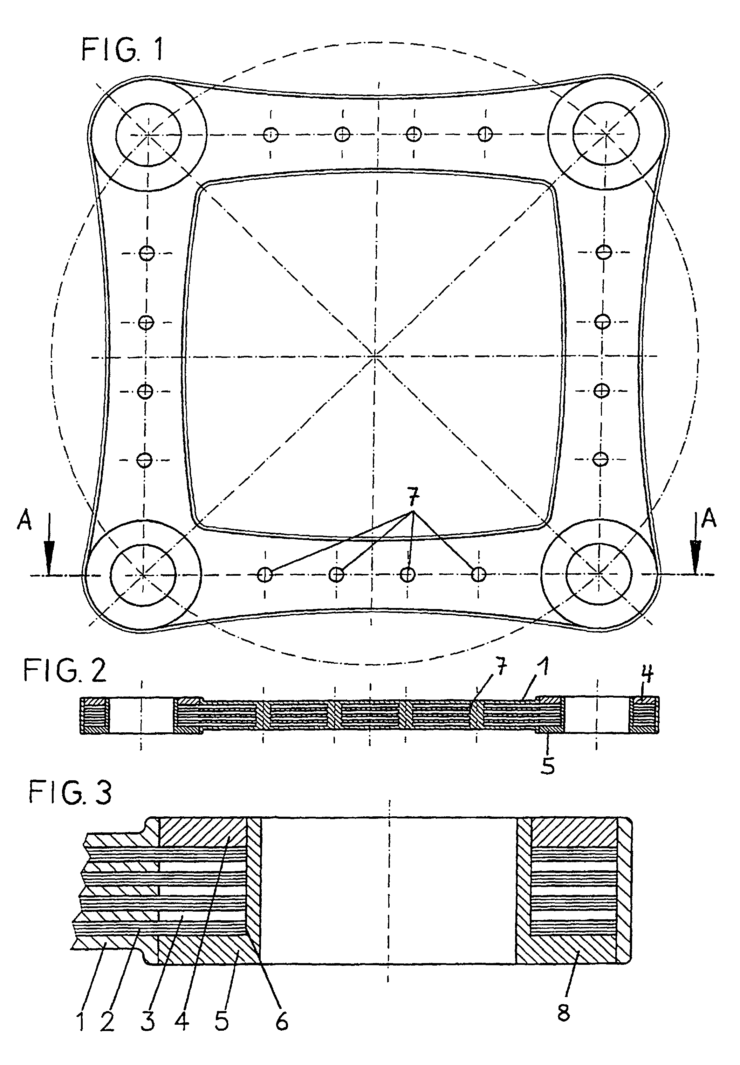

Spannbuchse 5 anliegt (vgl. Fig. 3). An der Spannbuchse 5 sind zwischen den Lamellen 2 Distanzringscheiben 3 angeordnet. Der Innendurchmesser der Distanzringscheiben 3 entspricht dem Durchmesser der Befestigungsbohrungen 6 der Lamellen 2, während ihr Außendurchmesser dem Außendurchmesser des Kragens 8 der zylindrischen Spannbuchse 5 entspricht. Ferner ist an jeder Spannbuchse 5 ein scheibenförmiger Spannring 4 angeordnet, der den gleichen Innendurchmesser und und den gleichen Außendurchmesser wie die Distanzringscheiben 3 aufweist, während seine Dicke jedoch etwa der Dicke des Kragens 8 der Spannbuchse 5 entspricht.

Die Lamellen 2 können aus Einzellamellen oder Lamellenpaketen bestehen.

Der so zusammengesetzte Lamellenpaketkranz ist mit Ausnahme der Axialflächen der Spannbuchsen 5 sowie der Spannringe 4 mit einem gummielastischen Material 1 umgossen, so daß der Bereich zwischen den beabstandeten Lamellen 2 und deren Bohrungen 7 mit dem gummielastischen Material 1 gefüllt und die Außenseiten der Lamellen 2 mit dem gummielastischen Material 1 ummantelt sind. Die Lamellen und das gummielastische Material bilden somit einen flexiblen Verbundkörper. Das gummielastische Material 1 schließt dabei bündig mit den Axialflächen der Spannbuchsen 5 sowie der Spannringe 4 ab. Das gummielastische Material 1 kann beispielsweise aus Polyurethan bestehen und festigkeitsverstärkende Fasern enthalten.

Der so vorgefertigte Lamellenpaketkranz wird dann an den Spannbuchsen 5 und den daran axial aufgeschobenen Spannringen 4 wechselweise mit den Anschlußflanschen der Kupplungshälften (nicht gezeigt) einer entsprechend ausgebildeten Wellenkupplung verschraubt. Zum Ausgleich eines Radialversatzes kann die Kupplung gegebenenfalls zusätzlich mit einer Zwischenhülse und einem weiteren erfindungsgemäßen Lamellenpaketkranz versehen werden.

Die Erfindung ist nicht auf das vorstehend beschriebene und in der Zeichnung dargestellte Ausführungsbeispiel beschränkt. So können beispielsweise die ringförmigen Lamellen 2 auch eine andere Form und auch mehr als vier Befestigungsbohrungen aufweisen.

## Patentansprüche

1. Flexible Wellenkupplung, deren beide jeweils einen Anschlußflansch aufweisende Kupplungshälften über einen Lamellenpaketkranz drehstarr und axial- und'winkelbeweglich miteinander verbunden sind, wobei der Lamellenpaketkranz aus mehreren durch Distanzelemente (3) axial beabstandeten Lamellen (2) gebildet ist und mittels umfangsmäßig verteilt angeordneter Befestigungs- und Spannelemente (4, 5) wechselweise an den beiden Anschlußflanschen befestigt ist, wobei die Lamellen (2) durch ein gummielastisches Material (1), das zwischen den Lamellen und an den Außenseiten des Lamellenpaketkranzes angeordnet ist, formschlüssig miteinander verbunden sind,
**dadurch gekennzeichnet, daß** der Lamellenpaketkranz mit Ausnahme der Axialflächen der Spannelemente (4, 5) vollständig mit dem gummielastischen Material (1) umgossen ist, wobei die Lamellen (2) im Bereich zwischen den Befestigungs- und Spannelementen (4, 5) mehrere Bohrungen aufweisen, in die das gummielastische Material (1) formschlüssig eingegossen ist.

2. Flexible Wellenkupplung nach Anspruch 1,
**dadurch gekennzeichnet, daß** die Lamellen (2) ringförmig oder laschenförmig ausgebildet sind.

3. Flexible Wellenkupplung nach Anspruch 1 oder 2,
**dadurch gekennzeichnet, daß** sich die Breite der Lamellen (2) ausgehend von den Befestigungs- und Spannelementen (4,5) zur Mitte zwischen den Befestigungs- und Spannelementen (4,5) hin verjüngt.

4. Flexible Wellenkupplung nach einem der Ansprüche 1 bis 3,
**dadurch gekennzeichnet, daß** die Spannelemente aus jeweils einen Kragen (8) aufweisenden Spannbuchsen (5) und darauf axial aufgeschobenen Spannringen (4) gebildet sind.

5. Flexible Wellenkupplung nach einem der Ansprüche 1 bis 4,
**dadurch gekennzeichnet, daß** die Distanzelemente aus axial auf die Spannbuchsen aufgeschobenen Distanzringscheiben (3) bestehen.

6. Flexible Wellenkupplung nach einem der Ansprüche 1 bis 5,
**dadurch gekennzeichnet, daß** das gummielastische Material (1) festigkeitserhöhende Fasern aufweist.

7. Flexible Wellenkupplungen nach Anspruch 4,
**dadurch gekennzeichnet, daß** das gummielastische Material (1) bündig mit den Axialflächen der Spannbuchsen (5) sowie der Spannringe (4) abschließt.

## Claims

1. A flexible shaft coupling, whose two coupling halves each having a connecting flange are connected with each other by means of a lamella packet collar in a rotationally rigid and axially and angularly moveable way, wherein the lamella packet collar is formed of several lamellae (2) spaced axially apart by spacer elements (3), and is alternately secured to the two connecting flanges by peripherally distributed fastening and clamping elements (4, 5), wherein the lamellae (2) are positively connected with each other by a resilient material (1) arranged between the lamellae and on the external sides of the lamella packet collar, **characterized in that** the lamella packet collar is completely encapsulated with the resilient material (1), except for the axial surfaces of the clamping elements (4, 5), wherein the lamellae (2) have several holes in the area between the fastening and clamping elements (4, 5), into which the resilient material (1) is positively cast.

2. The flexible shaft coupling according to claim 1, **characterized in that** the lamellae (2) are ringshaped or bracket-shaped.

3. The flexible shaft coupling according to claim 1 or 2, **characterized in that** the width of the lamellae (2) tapers from the fastening and clamping elements (4, 5) toward the center between the fastening and clamping elements (4, 5).

4. The flexible shaft coupling according to one of claims 1 to 3, **characterized in that** the clamping elements are made out of clamping bushings (5) each having a collar (8), and clamping rings (4) slipped axially thereon.

5. The flexible shaft coupling according to one of claims 1 to 4, **characterized in that** the spacer elements consist of spacer ring disks (3) slipped axially onto the clamping bushings.

6. The flexible shaft coupling according to one of claims 1 to 5, **characterized in that** the resilient material (1) has strength-enhancing fibers.

7. The flexible shaft coupling according to claim 4, **characterized in that** the resilient material (1) lies flush against the axial surfaces of the clamping bushings (5) and the clamping rings (4).

## Revendications

1. Accouplement flexible de l'arbre dont les deux moitiés d'accouplement, possédant respectivement une bride de raccordement, sont reliés entre elles rigidement en rotation et à mobilité axiale et angulaire par l'intermédiaire d'une couronne de paquet de lamelles, la couronne de paquet de lamelles étant composée par plusieurs lamelles (2) séparées par des éléments d'écartement (3) et fixée en alternance aux deux brides de raccordement au moyen d'éléments de fixation et de tension (4, 5) distribués circonférentiellement, les lamelles (2) étant reliées entre-elles en liaison en forme par un matériau d'élasticité caoutchouc (1) placé entre les lamelles et aux côtés extérieurs de la couronne de paquet de lamelles, **caractérisé en ce que** la couronne de paquet de lamelles, à l'exception des surfaces axiales des éléments de tension (4, 5), est entièrement enveloppée par le matériau d'élasticité caoutchouc (1), les lamelles (2) présentant plusieurs alésages situés entre les éléments de fixation et de tension (4, 5), dans lesquels le matériau d'élasticité caoutchouc (1) est introduit de manière de liaison en forme.

2. Accouplement flexible de l'arbre selon la revendication 1, **caractérisé en ce que** les lamelles (2) sont en forme de bague ou de collier.

3. Accouplement flexible de l'arbre selon la revendication 1 ou 2, **caractérisé en ce que** la largeur des lamelles (2), à partir des éléments de fixation et de tension (4, 5) en direction du milieu, diminue entre les éléments de fixation et de tension (4, 5).

4. Accouplement flexible de l'arbre selon l'une des revendications 1 à 3, **caractérisé en ce que** les éléments de tension sont respectivement formés à partir de douilles de serrage (5) présentant une collerette (8) et des bagues de serrage (4) mises en dessus de manière axiale.

5. Accouplement flexible de l'arbre selon l'une des revendications 1 à 4, **caractérisé en ce que** les éléments d'écartement sont composés de rondelles d'écartement (3) mises de manière axiale sur les douilles de serrage.

6. Accouplement flexible de l'arbre selon l'une des revendications 1 à 5, **caractérisé en ce que** le matériau d'élasticité caoutchouc (1) possède des fibres augmentant la résistance mécanique.

7. Accouplement flexible de l'arbre selon la revendication 4, **caractérisé en ce que** le matériau d'élasticité caoutchouc (1) est raccordé aux surfaces axiales des douilles de serrage (5) ainsi qu'aux bagues de serrage (4).
